# EUROPÄISCHE PATENTANMELDUNG

(11) **EP 2 886 927 A1**
(43) Veröffentlichungstag der Anmeldung: **24.06.2015**
(21) Anmeldenummer: 14192492.8
(22) Anmeldetag: 10.11.2014
(51) Int. Cl.: F16L 41/00, B60H 1/00, G01L 19/00, G01D 11/30

(54) **Anschlussstelle an einem Kältemittel führenden Bauteil**

(30) Priorität: 17.12.2013 DE 102013226166
(71) Anmelder: MAHLE Behr GmbH & Co. KG, 70469 Stuttgart (DE)
(72) Erfinder: Rais, Thomas, 71672 Marbach/N. (DE)
(74) Vertreter: BRP Renaud & Partner mbB Rechtsanwälte Patentanwälte Steuerberater

(57) **Zusammenfassung**

Die Erfindung betrifft eine Anschlussstelle (1) an einem Kältemittel führenden Bauteil, insbesondere an einer Kältemittelleitung (10), zum Anschließen eines Einschraubelements (2) an einen Aluminiumsockel (3), wobei das Einschraubelement (2) ein Außengewinde (6) aus einem Material aufweist, welches eine höhere Festigkeit als Aluminium und/oder eine andere Wärmeausdehnung aufweist und wobei in dem Aluminiumsockel (3) eine Gewindehülse (5) angeordnet ist, in welche das Einschraubelement (2) mit seinem Außengewinde (6) einschraubbar ist.

Hierdurch ist eine langfristig dichte Verbindung zwischen dem Einschraubelement (2) und dem Aluminiumsockel (3) möglich.

## Beschreibung

Die vorliegende Erfindung betrifft eine Anschlussstelle an einem Kältemittel führenden Bauteil zum Anschließen eines Einbauelements an einem Aluminiumsockel. Die Erfindung betrifft außerdem ein Kältemittelsystem eines Kraftfahrzeugs mit zumindest einer solchen Anschlussstelle.

Sensoren, insbesondere Druck- oder Temperatursensoren, werden in modernen Kraftfahrzeugen für eine Vielzahl an Überwachungsfunktionen eingesetzt und müssen diesbezüglich entsprechend angebunden sein. Da die Sensoren zudem austauschbar sein sollten, weisen diese üblicherweise ein Außengewinde auf, mit welchem sie in ein entsprechendes Innengewinde einer Anschlussstelle eingeschraubt werden können. Eine derartige Anschlussstelle kann beispielsweise an einem Aluminiumsockel angeordnet sein, der mit einer Kältemittelleitung oder einem Kältemittel führenden Bauteil, insbesondere eines Kältemittelsystems eines Kraftfahrzeugs, gekoppelt ist. Um den Sensor nun dicht in den Aluminiumsockel einzuschrauben, sind eine hohe Dichtkraft und damit auch eine hohe Einschraubkraft erforderlich. Aufgrund der vergleichsweise hohen Einschraubkräfte kann es jedoch zu einem Kriechen des Aluminiums kommen. Höhere Dichtkräfte könnten beispielsweise mit einem größeren Gewindedurchmesser oder einem längeren Gewinde erreicht werden, was jedoch oftmals bauraumbedingt nicht möglich ist.

Nachteilig bei der Verbindung der aus dem Stand der Technik bekannten Sensoren mit einem Aluminiumsockel ist somit, dass die Verbindung zwischen dem Sensor und dem Aluminiumsockel langfristig nicht zuverlässig abgedichtet werden kann. Dies liegt einerseits in den unterschiedlichen Wärmeausdehnungskoeffizienten des aus Edelstahl gefertigten Sensors und des aus Aluminium gefertigten Sockels sowie andererseits an den beengten Bauraumverhältnissen, die eine entsprechend lange bzw. größere Ausbildung des Gewindes verhindern. Zusätzliche Dichtungselemente können aufgrund der Beständigkeit gegenüber dem Dichtmittel nur sehr begrenzt eingesetzt werden, so dass im Großen und Ganzen lediglich metallische Dichtungen in Frage kommen, welche jedoch mit zusätzlichen Teile- und Montagekosten verbunden sind und auch wiederum technische Nachteile, wie insbesondere bei Kupferdichtungen im Hinblick auf die Kontaktkorrosion, haben.

Die vorliegende Erfindung beschäftigt sich daher mit dem Problem, eine Anschlussstelle zum Anschließen eines Einbauelements an einem Aluminiumsockel anzugeben, bei welcher das Einbauelement, beispielsweise ein Sensor, über ein Außengewinde langfristig dicht mit dem Aluminiumsockel verbunden werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer Anschlussstelle zum Anschließen eines Einbauelements, beispielsweise eines Sensors, an einen Aluminiumsockel eine Gewindehülse vorzusehen, die dicht in dem Aluminiumsockel angeordnet ist und in welche das Einbauelement mit seinem Außengewinde einschraubbar ist. Das Außengewinde ist aus einem Material ausgebildet, welches eine höhere Festigkeit als Aluminium und/oder eine andere Wärmeausdehnung aufweist. Die Gewindehülse weist dabei im Vergleich zum Aluminiumsockel anderer Materialeigenschaften, insbesondere eine höhere Festigkeit, auf, wodurch die erforderlichen Dichtkräfte und damit verbunden die erforderlichen Einschraubkräfte problemlos aufgebracht werden können. Die Gewindehülse selbst kann dabei aus einer Aluminiumlegierung sein, welche jedoch hinsichtlich ihrer Festigkeit deutlich über der Festigkeit des Aluminiumsockels liegt. Die erhöhte Festigkeit einer aus einer solchen Aluminiumlegierung ausgebildeten Gewindehülse reicht aus, das Einbauelement, respektive den Sensor langfristig dicht in dieselbe einschrauben zu können. Besonders vorteilhaft hierbei ist selbstverständ-lich, sofern das Material der Gewindehülse den gleichen oder zumindest einen sehr ähnlichen Wärmeausdehnungskoeffizienten, wie das Außengewinde des Einbauelements aufweist, wodurch eine temperaturbedingte Relativbewegung der Gewindehülse zum Einbauelement verhindert, zumindest aber minimiert werden kann. Alternativ hierzu kann selbstverständlich auch die Gewindehülse aus Edelstahl ausgebildet sein, so dass diese bei einem ebenfalls aus Edelstahl ausgebildeten Außengewinde des Einbauelements im günstigsten Fall den gleichen Wärmeausdehnungskoeffizienten aufweist, wie das Außengewinde des Einbauelements und zudem eine vergleichsweise hohe Festigkeit, wodurch das Einbauelement langfristig dicht eingeschraubt werden kann.

Bei einer vorteilhaften Weiterbildung der erfindungsgemäßen Lösung weist das Einbauelement eine konische Dichtfläche und die Gewindehülse einen komplementär dazu ausgebildeten Dichtsitz auf. Erfindungsgemäß besitzt somit die Gewindehülse ein Innengewinde, in welche das Einbauelement mit seinem Außengewinde einschraubbar ist und zugleich den zur Abdichtung erforderlichen Dichtsitz. Dieser liegt dicht an einer konischen Dichtfläche des Einbauelements an, sofern das Einbauelement in die Gewindehülse eingeschraubt ist. Durch den Umstand, dass nicht nur das Innengewinde, sondern zugleich auch der Dichtsitz Bestandteil der Gewindehülse sind, weist auch der Dichtsitz eine höhere Festigkeit auf und zwar egal ob er aus einer höherwertigen Aluminiumlegierung oder aus Edelstahl ausgebildet ist, wodurch die Dichtwirkung langfristig gewährleistet werden kann.

Zweckmäßig ist die Gewindehülse form- und/oder stoffschlüssig mit dem Aluminiumsockel verbunden. Eine stoffschlüssige Verbindung kann beispielsweise durch eine Lötverbindung erfolgen, mittels welcher die Gewindehülse in den Aluminiumsockel eingelötet wird. Alternativ ist auch ein Einkleben der Gewindehülse in den Aluminiumsockel denkbar, ebenso wie ein mechanisches Einpressen, ein Einschrauben oder auch Schweißen (Laser-, Reib- usw.). Dabei sind nicht nur die aufgezählten Verbindungsmöglichkeiten einzeln zu betrachten, sondern auch in nahezu beliebiger Kombination.

Die vorliegende Erfindung beruht weiter auf dem allgemeinen Gedanken, bei einem Kältesystem eines Kraftfahrzeuges zumindest eine solche Anschlussstelle vorzusehen, in welche ein Einbauelement, insbesondere ein Sensor in einen Aluminiumsockel, der wiederum an eine Kältemittelleitung angebunden ist, eingeschraubt ist. Die erfindungsgemäße Anschlussstelle eignet sich dabei insbesondere für den Einsatz in Bezug auf Kältemittel, da ausschließlich eine metallische Dichtung vorliegt, die gegenüber sämtlichen Kältemitteln widerstandsfähig und beständig ist. Rein theoretisch kann die die Anschlussstelle natürlich auch bei einem Kühlsystem zur Motorkühlung in einem Kraftfahrzeug eingesetzt werden.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

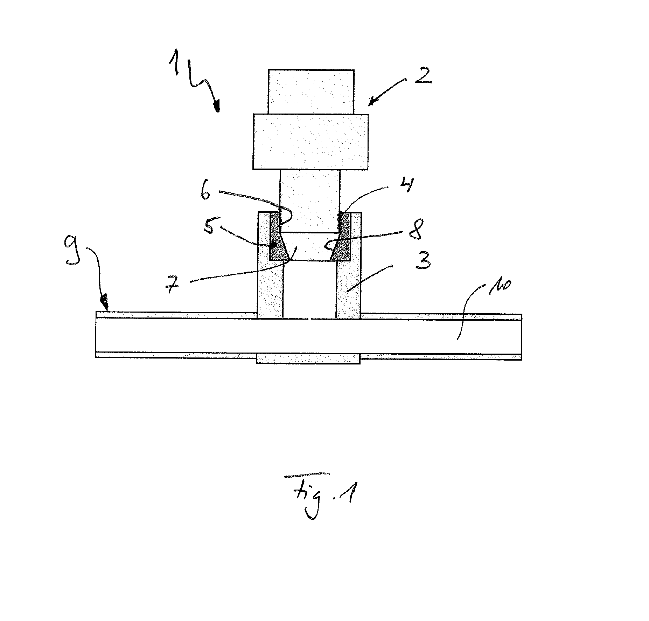

Die einzige Fig. 1 zeigt eine Schnittdarstellung durch eine erfindungsgemäße Anschlussstelle.

Entsprechend der Fig. 1 umfasst eine Anschlussstelle 1 ein Einbauelement 2, das beispielsweise als Sensor ausgebildet sein kann, sowie einen Aluminiumsockel 3, wobei der Sensor beispielsweise als Drucksensor ausgebildet und über ein Außengewinde 4 indirekt in den Aluminiumsockel 3 eingeschraubt ist. Zwischen dem Einbauelement 2 und dem Aluminiumsockel 3 ist dabei erfindungsgemäß eine Gewindehülse 5 mit einem Innengewinde 6 angebracht, in welches das Einbauelement 2 mit seinem Außengewinde 4 eingeschraubt ist. Das Außengewinde 4 des Einbauelements 2 ist dabei aus einem material ausgebildet, welches eine höhere Festigkeit als Aluminium und/oder eine andere Wärmeausdehnung aufweist, wogegen der Aluminiumsockel 3 - wie der Name bereits sagt - aus Aluminium ausgebildet ist. Insbesondere kann das Außengewinde 4 aus einer Aluminiumlegierung oder aus Edelstahl ausgebildet sein. Um dennoch ein dichtes und insbesondere langfristig dichtes Einschrauben des Einbauelements 2 in den Aluminiumsockel 3 gewährleisten zu können, ist die erfindungsgemäße Gewindehülse 5 vorgesehen, die beispielsweise aus einer Aluminiumlegierung oder aus Edelstahl ausgebildet ist. Ist die Gewindehülse 5 aus einer Aluminiumlegierung ausgebildet, so weist diese eine höhere Festigkeit auf als der Aluminiumsockel 3.

Betrachtet man die Fig. 1 weiter, so kann man erkennen, dass das Einbauelement 2 eine konische Dichtfläche 7 und die Gewindehülse 5 einen komplementär dazu ausgebildeten und ebenfalls konischen Dichtsitz 8 aufweist. Durch das Anordnen des Dichtsitzes 8 in der Gewindehülse 5 kann auch dieser mit einem Material mit vergleichsweiser höherer Festigkeit als der Aluminiumsockel 3 ausgebildet werden, wodurch dieser höhere Anpresskräfte der Dichtfläche 7 problemlos aufnehmen kann. Des Weiteren ist dabei vorteilhafterweise vorgesehen, dass das Material der Gewindehülse 5 den gleichen oder zumindest einen ähnlichen Wärmeausdehnungskoeffizienten wie das Außengewinde 4 bzw. die Dichtfläche 7 des Einbauelements 2 aufweist. Hierdurch kann eine temperaturbedingte und eine aufgrund unterschiedlicher Wärmeausdehnungskoeffizienten bedingte Relativbewegung der Gewindehülse 5 zum Einbauelement 2, speziell im Bereich der Dichtfläche 7 bzw. des Dichtsitzes 8 verhindert, zumindest aber minimiert werden, wodurch die Dichtung auch langfristig gewährleistet werden kann.

Die Gewindehülse 5 ist erfindungsgemäß form- und/oder stoffschlüssig mit dem Aluminiumsockel 3 verbunden, insbesondere ist diese in den Aluminiumsockel 3 eingepresst, eingelötet, eingeschraubt, eingeschweißt oder eingeklebt. Die Anschlussstelle 1 kann allgemein beispielsweise in einem Kältemittelsystem 9 eines im Übrigen nicht gezeigten Kraftzeugs verwendet werden, wobei in diesem Fall der Aluminiumsockel 3 an einer Kältemittelleitung 10 angebunden ist. Alternativ kann die Anschlussstelle auch in einem Kühlsystem zur Motorkühlung bei einem Kraftfahrzeug eingesetzt werden.

Mit der erfindungsgemäßen Anschlussstelle 1 lassen sich die nachfolgend aufgezählten Vorteile erzielen:
- eine dichte Einschraubverbindung,
- eine geringere Beschädigungsanfälligkeit des Dichtsitzes 8 durch eine im Vergleich zum Aluminiumsockel 3 höhere Materialhärte bzw. Festigkeit,
- Entfall von weiteren, zusätzlichen Dichtelementen,
- ein problemloses Ein- und Ausschrauben des Einbauelements (Sensors) 2, da der Dichtsitz 8 nicht durch die Dichtfläche 7 aus Edelstahl eingedrückt wird,
- eine konstante Materialpaarung zwischen der Gewindehülse 5 und dem Einbauelements 2 und zwar unabhängig von der verwendeten Aluminiumlegierung des Aluminiumsockels 3, so dass nur auf die Beständigkeit der statischen Verbindung der Gewindehülse 5 zum Aluminiumsockel 3 geachtet werden muss.

## Patentansprüche

1. Anschlussstelle (1) an einem Kältemittel führenden Bauteil, insbesondere an einer Kältemittelleitung (10), zum Anschließen eines Einschraubelements (2) an einen Aluminiumsockel (3), wobei das Einschraubelement (2) ein Außengewinde (6) aus einem Material aufweist, welches eine höhere Festigkeit als Aluminium und/oder eine andere Wärmeausdehnung aufweist und wobei in dem Aluminiumsockel (3) eine Gewindehülse (5) angeordnet ist, in welche das Einschraubelement (2) mit seinem Außengewinde (6) einschraubbar ist.

2. Anschlussstelle nach Anspruch 1,
**dadurch gekennzeichnet, dass**
die Gewindehülse (5) aus einem Material besteht, welches eine höhere Festigkeit als Aluminium aufweist, insbesondere aus einer Aluminiumlegierung oder aus Edelstahl ausgebildet ist.

3. Anschlussstelle nach Anspruch 1 oder 2,
**dadurch gekennzeichnet, dass**
dass das Einschraubelement (2) als Sensor und das Außengewinde (6) aus Edelstahl ausgebildet sind.

4. Anschlussstelle nach einem der vorhergehenden Ansprüche,
**dadurch gekennzeichnet, dass**
das Einschraubelement (2) eine konische Dichtfläche (7) und die Gewindehülse (5) einen komplementär dazu ausgebildeten Dichtsitz (8) aufweist.

5. Anschlussstelle nach einem der vorhergehenden Ansprüche,
**dadurch gekennzeichnet, dass**
die Gewindehülse (5) form- und/oder stoffschlüssig mit dem Aluminiumsockel (3) verbunden ist.

6. Anschlussstelle nach einem der vorhergehenden Ansprüche,
**dadurch gekennzeichnet, dass**
die Gewindehülse (5) in den Aluminiumsockel (3) eingepresst, eingelötet, eingeschraubt, eingeschweißt oder eingeklebt ist.

7. Anschlussstelle nach einem der Ansprüche 3 bis 6,
**dadurch gekennzeichnet, dass**
der Sensor als Druck- oder Temperatursensor für ein Kältemittelsystem (9) ausgebildet ist.

8. Kältemittelsystem (9) eines Kraftfahrzeugs mit zumindest einer Anschlussstelle (1) nach einem der Ansprüche 1 bis 7, wobei der Aluminiumsockel (3) an einer Kältemittelleitung (10) oder an ein Kältemittel führendes Bauteil angebunden ist.

9. Kältemittelsystem nach Anspruch 8,
**dadurch gekennzeichnet, dass**
dass das Einschraubelement (2) als Sensor und das Außengewinde (6) aus Edelstahl ausgebildet sind.
